# EUROPÄISCHE PATENTSCHRIFT

(11) **EP 1 309 468 B1**
(45) Veröffentlichungstag und Bekanntmachung des Hinweises auf die Patenterteilung: **09.01.2008**
(21) Anmeldenummer: 01271802.9
(22) Anmeldetag: 23.11.2001
(51) Int. Cl.: B60N 2/433

(54) **BETÄTIGUNGSVORRICHTUNG FÜR EINEN FAHRZEUGSITZ-EINSTELLER**
ACTUATING DEVICE FOR A VEHICLE SEAT ADJUSTMENT SYSTEM
DISPOSITIF DE COMMANDE POUR UN SYSTEME DE REGLAGE DE SIEGE DE VEHICULE

(30) Priorität: 22.12.2000 DE 10064474
(43) Veröffentlichungstag der Anmeldung: 14.05.2003
(73) Patentinhaber: KEIPER GmbH & Co. KG, 67657 Kaiserslautern (DE)
(72) Erfinder: EPPERT, Dietmar, 42857 Remscheid (DE); BECKER, Martin, 42369 Wuppertal (DE); VOSS, Heinz, 51375 Leverkusen (DE); LEIBELING, Christoph, 53773 Hennef (DE); FATH, Markus, 42113 Wuppertal (DE)
(74) Vertreter: Patentanwälte Hosenthien-Held und Dr. Held
(86) Internationale Anmeldenummer: PCT/EP2001/013642
(87) Internationale Veröffentlichungsnummer: WO 2002/051665

(56) Entgegenhaltungen:
- DE-A- 19 628 716
- US-A- 4 995 669
- US-A- 5 733 008

## Beschreibung

Die Erfindung betrifft eine Betätigungsvorrichtung für einen Fahrzeugsitz-Einsteller, insbesondere eines Kraftfahrzeugsitzes, mit den Merkmalen des Oberbegriffs des Anspruches 1.

Eine bekannte Betätigungsvorrichtung dieser Art ist bei einem Fahrzeugsitz mit zwei Rastbeschlägen zur Neigungseinstellung der Rückenlehne vorgesehen. Durch eine Schwenkbewegung der als Handhebel ausgebildeten Betätigungsvorrichtung werden die Ratsbeschläge entriegelt, so daß die Rückenlehne schwenkbar ist. Da der Handhebel aus Platzgründen einarmig ausgebildet ist, also außerhalb seines Schwerpunktes gelagert ist, besteht im Crashfall die Gefahr, daß der Handhebel aufgrund seiner Trägheit eine ungewollte Schwenkbewegung durchführt und dadurch die Rastbeschläge entriegelt.

In der DE 196 28 716 A1 wird daher für eine Betätigungsvorrichtung eines Längseinstellers mit einem schwenkbaren Hebel vorgeschlagen, eine Feder vorzusehen, deren Kraft-Kennlinie im Anfangsbereich stark ansteigt und im weiteren Verlauf nach einem lokalen Maximum eine negative Steigung zur Erleichterung der Betätigung aufweist. Bei entsprechend hohen Crashkräften kann aber auch das lokale Maximum überwunden werden, so daß der Einsteller dann entriegelt.

Aus der US 5 733 008 ist eine Betätigungsvorrichtung für einen Fahrzeugsitz-Einsteller entsprechend dem Oberbegriff des Anspruchs 1 bekannt.

Der Erfindung liegt die Aufgabe zu Grunde, eine Betätigungsvorrichtung der eingangs genannten Art zu verbessern. Diese Aufgabe wird erfindungsgemäß durch eine Betätigungsvorrichtung mit den Merkmalen des Anspruches 1 und durch einen Fahrzeugsitz mit den Merkmalen des Anspruches 10 gelöst. Vorteilhafte Ausgestaltungen sind Gegenstand der Unteransprüche.

Dadurch, daß ein beschleunigungssensitives Mittel zum Festlegen und/oder Verriegeln des Handhebels im Crashfall vorgesehen ist, wird im Crashfall der Handhebel unabhängig von der Größe der Crashkräfte gesichert, so daß der Einsteller nicht entriegelt. Die exzentrische Lagerung des Handhebels ist so zu verstehen, daß er außerhalb seines Schwerpunktes gelagert ist. Als beschleunigungssensitives Mittel ist vorzugsweise ein schwenkbar gelagerter Schwungkörper vorgesehen, welcher ebenfalls vorzugsweise exzentrisch gelagert ist, um auf einfache Weise empfindlich auf Beschleunigungen zu reagieren. Für einen modularen Aufbau, d.h. damit die Betätigungseinrichtung eine Einheit bildet, ist der Schwungkörper vorzugsweise auf dem Handhebel gelagert. Ein im Vergleich zum Handhebel schnelleres Ansprechen des Schwungkörpers wird durch eine geringere Masse erreicht.

In einer bevorzugten Ausführungsform wirkt der Schwungkörper im Crashfall mit einem strukturfesten Teil zusammen, um den Handhebel zu verriegeln und/oder festzulegen. Hierfür weist der Schwungkörper vorzugsweise einen konvex geformten Rand auf, welcher bei Anlage an das strukturfeste Teil eine Sperrwirkung erzeugt. Das vorzugsweise ebenfalls konvexe, strukturfeste Teil kann beispielsweise ein einstellerfester Bolzen sein, der im Gebrauchsfall zugleich als Anschlag für den Handhebel dient.

Die erfindungsgemäße Betätigungsvorrichtung kann in einem Fahrzeugsitz beispielsweise bei einem Neigungseinsteller, bei einem Höheneinsteller, bei einem Längseinsteller oder bei einer - vorliegend auch als Einsteller bezeichneten - Entriegelungsvorrichtung für Sitzfüße eingesetzt werden.

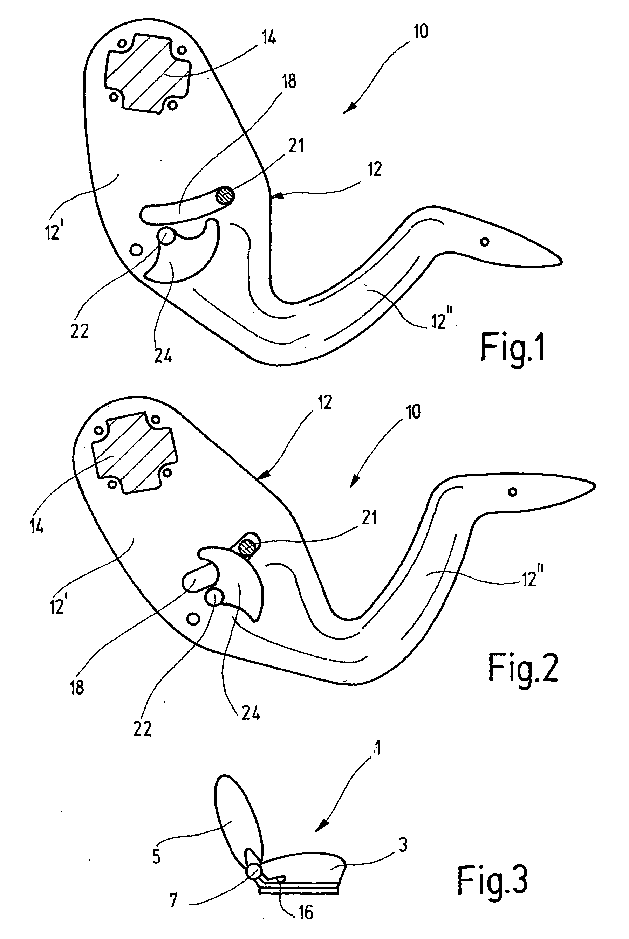

Im folgenden ist die Erfindung anhand eines in der Zeichnung dargestellten Ausführungsbeispiels näher erläutert. Es zeigen
- Fig. 1: eine schematische Seitenansicht des Ausführungsbeispiels in der Ruhestellung,
- Fig. 2: eine Darstellung entsprechend Fig. 1 im Crashfall, und
- Fig. 3: eine schematische Seitenansicht eines Fahrzeugsitzes.

Ein Fahrzeugsitz 1 für ein Kraftfahrzeug weist ein Sitzteil 3 und eine Rückenlehne 5 auf, welche mittels je eines als Rastbeschlag ausgebildeten Einstellers 7 auf den beiden Seiten des Fahrzeugsitzes 1 am Sitzteil 3 angebracht ist. Durch Entriegeln der Einsteller 7 kann die Rückenlehne 5 geschwenkt werden, um deren Neigung einzustellen. Die Einsteller 7 werden durch eine auf einer Seite des Fahrzeugsitzes 1 angeordnete Betätigungsvorrichtung 10 entriegelt.

Die Betätigungsvorrichtung 10 weist einen relativ zu den Einstellern 7 drehbar gelagerten Handhebel 12 auf, welcher drehfest auf einer Welle 14 sitzt. Die Welle 14 steht mit den Einstellern 7 so in Wirkverbindung, daß bei einer Drehung der Welle 14 über Nockenscheiben entsprechende Riegel in einem Beschlagsunterteil der Einsteller 7 bewegt werden und mit Verzahnungen eines Beschlagsoberteils in Eingriff kommen bzw. außer Eingriff gebracht werden. Der Handhebel 12 weist um die Welle 14 herum und in einer Richtung radial abstehend einen laschenförmigen Bereich 12' auf, an welchen sich in mehr tangentialer Richtung ein armförmiger Bereich 12" anschließt. Am armförmigen Bereich 12" ist ein dem Benutzer zugänglicher, in Fahrtrichtung vorstehender Handgriff 16 zur Bewegung des Handhebels 12 angebracht.

Im laschenförmigen Bereich 12' des Handhebels 12 ist eine Kulisse 18 vorgesehen, welche als Kreisbogen mit der Welle 14 als Krümmungsmittelpunkt ausgebildet ist. Die Kulisse 18 umschließt einen Bolzen 21, der fest mit dem Beschlagsunterteil des in unmittelbarer Nähe des Handhebels 12 angeordneten Einstellers 7 verbunden ist, also sitzteilfest ist, und parallel zur Welle 14 von diesem Einsteller 7 absteht. Der Bolzen 21 ist innerhalb der Kulisse 18 und in der Ruhestellung an deren oberen, in Fahrtrichtung weiter vorne gelegenen Ende angeordnet, wobei der Handhebel 12 für eine Betätigungsbewegung nach oben ausgelegt ist.

In der Nähe des unteren, in Fahrtrichtung weiter hinten gelegenen Endes der Kulisse 18 ist am unteren Rand auf einem Zapfen 22 ein kleiner Schwungkörper 24 (Segment) schwenkbar gelagert. Der näherungsweise als Kreissektor mit sichelförmigem Viertelskreisbogen gestaltete, in der Nähe seines Kreismittelpunktes, also außerhalb seines Schwerpunktes, gelagerte Schwungkörper 24 hängt in der Ruhestellung unterhalb der Kulisse 18. Die Kulisse 18 befindet sich jedoch im Schwenkbereich des Schwungkörpers 24.

Im Gebrauchsfall der Betätigungsvorrichtung 10 wird der Handhebel 12 aus der Ruhestellung heraus so bewegt, daß sich die Kulisse 18 über den als Anschlag dienenden Bolzen 21 schiebt, bis dieser in die Nähe des unteren, in Fahrtrichtung weiter hinten gelegenen Endes der Kulisse 18 gelangt, und dann wieder in die Ruhestellung zurück bewegt, in welcher der Handhebel 12 vorzugsweise durch eine Feder gehalten wird. Im Crashfall bewirkt die Trägheit der beweglich gelagerten und kraftschlüssig gehaltenen Bauteile, daß diese relativ zu den mit der Fahrzeugstruktur fest verbundenen Bauteilen später abgebremst, d.h. - in ihrem Bezugssystem betrachtet - beschleunigt werden.

Vorliegend werden also der Handhebel 12 und der Schwungkörper 24, welche beide jeweils exzentrisch, d.h. außerhalb ihres Schwerpunktes gelagert sind, beispielsweise bei einem Frontalcrash relativ zum sitzteilfesten Bolzen 21 nach vorne bewegt. Da die Masse des Schwungkörpers 24 sehr viel kleiner ist als die Masse des Handhebels 12, wird der Schwungkörper 24 stärker beschleunigt und führt daher sehr viel schneller eine Schwenkbewegung nach vorne und dann nach oben durch. Der Schwungkörper 24 gelangt dadurch in den Bereich der Kulisse 18. Die Abmessungen des Schwungkörpers 24 und die Anordnung des Zapfens 22 sind so gewählt, daß der Schwungkörper 24 mit seinem konvexen Außenrand in Anlage an den Bolzen 21 gelangt und dadurch den Handhebel 12 kurzzeitig festlegt. Es können Mittel, z.B. ein Anschlag am Handhebel 12, vorgesehen sein, um ein Weiterschwenken des Schwungkörper 24 aufgrund seines Bewegungsschwunges zu verhindern, falls die erwünschte Relativposition von Schwungkörper 24 und Bolzen 21 noch nicht erreicht ist.

Die Tangentialflächen im Berührpunkt des Schwungkörpers 24 und des Bolzens 21 sind in diesem Zustand nahezu senkrecht zur Verbindungslinie zwischen dem Zapfen 22 und dem Bolzen 21 angeordnet, so daß ein hoher Reibschluß, beinahe sogar ein Formschluß vorliegt. Der Reibschluß reicht aus, damit die vom Handhebel 12 auf den Schwungkörper 24 ausgeübten Kräfte nicht den Schwungkörper 24 beiseite drücken, d.h. Handhebels 12 kann keine Schwenkbewegung ausführen bis die einwirkende Beschleunigungsspitze abgebaut ist. Der Schwungkörper 24 kann anschließend wieder nach unten schwenken, wobei die jetzt noch wirkende Relativbeschleunigung nicht mehr ausreicht, um den Handhebel 12 zu schwenken. Ein Entriegeln der Einsteller 7 wird dadurch verhindert.

## Patentansprüche

1. Betätigungsvorrichtung für einen Fahrzeugsitz-Einsteller, insbesondere eines Kraftfahrzeugsitzes, mit einem schwenkbaren Handhebel (12) für eine manuelle Betätigung, welcher exzentrisch gelagert ist und mit dem Einsteller (7) in Wirkverbindung steht, **dadurch gekennzeichnet, daß** ein beschleunigungssensitives Mittel (24) zum Festlegen und/oder Verriegeln des Handhebels (12) im Crashfall vorgesehen ist.

2. Betätigungsvorrichtung nach Anspruch 1, **dadurch gekennzeichnet, daß** als beschleunigungssensitives Mittel ein schwenkbar gelagerter Schwungkörper (24) vorgesehen ist.

3. Betätigungsvorrichtung nach Anspruch 2, **dadurch gekennzeichnet, daß** der Schwungkörper (24) exzentrisch gelagert ist.

4. Betätigungsvorrichtung nach Anspruch 2 oder 3, **dadurch gekennzeichnet, daß** der Schwungkörper (24) auf dem Handhebel (12) gelagert ist.

5. Betätigungsvorrichtung nach einem der Ansprüche 2 bis 4, **dadurch gekennzeichnet, daß** der Schwungkörper (24) eine geringere Masse als der Handhebel (12) aufweist.

6. Betätigungsvorrichtung nach einem der Ansprüche 2 bis 5, **dadurch gekennzeichnet, daß** der Schwungkörper (24) einen konvex geformten Rand aufweist.

7. Betätigungsvorrichtung nach einem der Ansprüche 2 bis 6, **dadurch gekennzeichnet, daß** der Schwungkörper (24) im Crashfall mit einem strukturfesten Teil (21) zusammen wirkt.

8. Betätigungsvorrichtung nach Anspruch 7, **dadurch gekennzeichnet, daß** ein einstellerfester Bolzen (21) zum Zusammenwirken mit dem Schwungkörper (24) vorgesehen ist.

9. Betätigungsvorrichtung nach Anspruch 8, **dadurch gekennzeichnet, daß** im Handhebel (12) eine Kulisse (18) vorgesehen ist, welche den einstellerfesten Bolzen (21) umschließt.

10. Fahrzeugsitz, insbesondere Kraftfahrzeugsitz, mit einem Einsteller (7), **gekennzeichnet durch** eine Betätigungsvorrichtung (10) nach einem der Ansprüche 1 bis 9.

## Claims

1. Activation device for a vehicle seat adjuster, particularly a motor vehicle seat, possessing a pivotable hand lever (12) for manual activation, which is beared excentrically and working in conjunction with the adjuster (7), **characterized in that** an acceleration-sensitive feature (24) is provided to immobilize and/or lock the hand lever (12) in the event of a crash.

2. Activation device according to Claim 1, **characterized in that** a pivotably beared pendulum element (24) is installed as an acceleration-sensitive agent.

3. Activation device according to Claim 2, **characterized in that** the pendulum element (24) is beared excentrically.

4. Activation device according to Claim 2 or 3, **characterized in that** the pendulum element (24) is beared on the hand lever (12).

5. Activation device according to one of Claims 2 to 4, **characterized in that** the pendulum element (24) has a smaller mass than the hand lever (12).

6. Activation device according to one of Claims 2 to 5, **characterized in that** the pendulum element (24) has a convex-shaped rim.

7. Activation device according to one of Claims 2 to 6, **characterized in that** in the event of a crash, the pendulum element (24) works in conjunction with a frame-fixed component (21).

8. Activation device according to Claim 7, **characterized in that** an adjuster-fixed bolt (21) is designed to work in conjunction with the pendulum element (24).

9. Activation device according to Claim 8, **characterized in that** there is a slotted link (18) in the hand lever (12) embracing the adjuster-fixed bolt (21).

10. Vehicle seat, particularly a motor vehicle seat, with an adjuster (7), **characterized by** an activation device (10) according to one of Claims 1 to 9.

## Revendications

1. - Dispositif de commande pour un système de réglage de siège de véhicule, en particulier d'un siège de véhicule automobile, comportant un levier à main pivotant (12) pour une commande manuelle, qui est monté de manière excentrée et coopère avec le système de réglage (7), **caractérisé par le fait qu'**un moyen sensible à l'accélération (24) est prévu pour fixer et/ou verrouiller le levier à main (12) en cas de collision.

2. - Dispositif de commande selon la revendication 1, **caractérisé par le fait qu'**en tant que moyen sensible à l'accélération, un corps oscillant monté pivotant (24) est prévu.

3. - Dispositif de commande selon la revendication 2, **caractérisé par le fait que** le corps oscillant (24) est monté de manière excentrée.

4. - Dispositif de commande selon l'une des revendications 2 ou 3, **caractérisé par le fait que** le corps oscillant (24) est monté sur le levier à main (12).

5. - Dispositif de commande selon l'une des revendications 2 à 4, **caractérisé par le fait que** le corps oscillant (24) présente une masse plus faible que le levier à main (12).

6. - Dispositif de commande selon l'une des revendications 2 à 5, **caractérisé par le fait que** le corps oscillant (24) présente un bord de forme convexe.

7. - Dispositif de commande selon l'une des revendications 2 à 6, **caractérisé par le fait que** le corps oscillant (24) coopère avec un élément (21) solidaire du système de réglage en cas de collision.

8. - Dispositif de commande selon la revendication 7, **caractérisé par le fait qu'**un boulon de réglage (21) solidaire de la structure est prévu pour coopérer avec le corps oscillant (24).

9. - Dispositif de commande selon la revendication 8, **caractérisé par le fait que**, dans le levier à main (12) est prévue une coulisse (18), laquelle entoure le boulon de réglage (21) solidaire du système de réglage.

10. - Siège de véhicule, en particulier siège de véhicule automobile, comportant un système de réglage (7), **caractérisé par** un dispositif de commande (10) tel que défini à l'une des revendications 1 à 9.
